# EUROPEAN PATENT APPLICATION

(11) **EP 4 742 074 A1**
(43) Date of publication of application: **13.05.2026**
(21) Application number: 25213956.3
(22) Date of filing: 06.11.2025
(51) Int. Cl.: G06F 21/72

(54) **INLINE CRYPTOGRAPHY TECHNIQUES WITH A STORAGE ACCELERATOR**

(30) Priority: 07.11.2024 US 202463717815 P
(71) Applicant: Marvell Asia Pte Ltd, Singapore 369522 (SG)
(72) Inventor: Suri, Salil, Fremont, CA, 94539 (US); Gonar, Kalyan Prabhu, Mountain House, CA, 95391 (US); Anand Karjala, Subramanyam, Mountain House, CA, 95391 (US)
(74) Representative: Grünecker Patent- und Rechtsanwälte PartG mbB

(57) **Abstract**

Inline cryptography techniques implemented with a storage accelerator may enable encryption of data in transit between the storage accelerator and the storage device. In one example, the storage accelerator maintains local I/O context information for I/O commands and modifies the data pointer (e.g., PRP) in the I/O command sent to the storage device to include a reference (e.g., index) to the I/O context information. For a read command, the storage accelerator receives encrypted data from the SSD along with the modified data pointer. The storage accelerator may then determine the appropriate key and tweak value based on the modified data pointer, decrypt the data with the key and tweak value, and send the decrypted data to the host device without waiting for all data to be received from the storage device.

## Description

### Priority Application

This patent application claims priority to and/or receives benefit from U.S. Provisional Application No. 63/717,815, titled, "Nonvolatile Memory express (NVMe) Interposer Inline Crypto," filed on November 7, 2024. The U.S. Provisional Application is hereby incorporated by reference in its entirety.

### Background

Non-volatile storage refers to memory technologies that retain stored data even when power is removed. Examples of non-volatile storage media include flash memory and other persistent memory types. Non-volatile storage is commonly used in computing systems to store firmware, operating system components, application data, and user-generated content. Unlike volatile memory such as dynamic random-access memory (DRAM), which requires continuous power to maintain data integrity, non-volatile storage provides long-term data retention.

Flash memory, particularly NAND flash, is widely deployed in solid-state drives (SSDs) and embedded systems due to its high density and cost efficiency. NVMe (Non-Volatile Memory Express) is a protocol designed to optimize access to flash storage over PCI Express (PCle), offering low latency and high throughput. NVMe enables parallel access to multiple storage queues, improving performance in data-intensive applications.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an exemplary computing system in which inline cryptography techniques may be implemented with a storage accelerator, according to some embodiments of the disclosure.
FIG. 2 illustrates another exemplary computing system in which inline cryptography techniques may be implemented with a storage accelerator, according to some embodiments of the disclosure.
FIGS. 3A-3C depict flow charts illustrating an example of a method for implementing inline cryptography techniques with a storage accelerator, according to some embodiments of the disclosure.
FIG. 4 illustrates an example of an input/output (I/O) context table, modified data pointer, and key table, according to some embodiments of the disclosure.
FIG. 5A is a diagram of an example method of performing inline cryptography techniques, including a TLP flow for an NVMe write command, according to some embodiments of the disclosure.
FIG. 5B is a diagram of an example method of performing inline cryptography techniques, including a TLP flow for an NVMe read command, according to some embodiments of the disclosure.
FIG. 6 illustrates an exemplary solid-state drive (SSD) which may be included in a system implementing inline cryptography techniques with a storage accelerator, according to some embodiments of the disclosure.
FIG. 7 illustrates an exemplary computing system, which may represent a host device in a system in which inline cryptography techniques are implemented with a storage accelerator, according to some embodiments of the disclosure.

### Detailed Description

### Overview

Storage devices, such as solid-state drives (SSDs), are often connected directly to host computing devices through physical interfaces such as M.2 connectors, PCIe add-in card slots, or other standardized form factors. These physical connections enable the establishment of communication pathways between the host device and the storage device, allowing for data transfer operations and command exchanges through protocols such as NVMe over PCle or SATA or other standard protocol. In some examples, a system may include a storage accelerator (which may also be referred to as a storage interposer) between the host device and SSDs. In addition to functioning as a pass-through device, a storage accelerator may perform a variety of functions, such as enabling SSD virtualization, data redundancy, and improved serviceability.

SSDs may incorporate encryption and decryption functionality to secure data stored on the device, where data is encrypted by the SSD before being written to the storage medium and decrypted by the SSD prior to being transmitted to the requester. This encryption and decryption processing may be performed by dedicated hardware encryption engines within the storage controller of the SSD to ensure data is encrypted at rest on the physical storage medium.

In addition to encrypting data at rest, encryption of data in transit between the storage accelerator and the SSD would add an additional layer of security; however, several challenges complicate implementing cryptography in a storage accelerator. For example, implementing a store-forward cryptographic solution would incur a performance penalty because the storage accelerator would have to wait for all the encrypted data to be received from the SSD prior to decrypting the data for transmission to the host. Performing encryption "inline" or on-the-fly as data is received from an SSD would avoid the performance penalty of a store-forward cryptography solution; however, in typical implementations, there is insufficient contextual information exchanged between the SSD and requester during the data phase of an input/output (I/O) command to enable inline decryption.

For example, consider a typical NVMe I/O transaction between an SSD and a host, which involves a command phase, a data phase, and a completion phase. During the command phase, the host device writes a command to a submission queue and updates the submission queue doorbell register. The SSD then fetches the command by reading a pointer from the doorbell register and performing a memory read to fetch the command from the submission queue. The SSD then processes the command and prepares for the data phase. In one example in which the transfer size indicated in the command exceeds 8KB, the SSD may read a physical region page (PRP) list structure from host memory, which provides pointers to locations in host memory to store data (for a read command) or locations from which to retrieve data (for a write command). In the data phase, for a read command, the SSD retrieves the requested data from its media and sends the data to the host device (e.g., via multiple PCIe memory write transaction layer packets (TLPs) to transfer the data to host memory). For a write command, the SSD requests the data from host memory (e.g., via multiple PCIe memory read TLPs) and writes the data to the designated locations in its media. In the completion phase, the SSD may send a completion structure to the host device, and may also trigger an interrupt (e.g., an MSI-X interrupt) to alert the host device that it has posted a completion.

The host device (or storage accelerator) may exchange information (e.g., commands, data, and completions) with the SSD using PCIe TLPs. PCle TLPs include a header and an optional data payload. The TLP header specifies the target memory address, the size of the data transfer, transaction identifiers for matching requests with completions, and routing information necessary for proper delivery across the PCle interconnect. One challenge of implementing inline cryptography in a storage accelerator is that the information in a write TLP from an SSD may be insufficient to enable the storage accelerator to decrypt the data. For example, the storage accelerator may need to identify a variety of contextual information associated with the I/O command in order to determine the appropriate key and tweak value to decrypt the data, such as the host (e.g., in an example in which the storage accelerator is abstracting multiple hosts), the host virtual machine (VM) (e.g., in an example in which the storage accelerator is abstracting multiple host VMs), the namespace, the host command, the logical block address (LBA), the intra-LBA offset.

In accordance with examples described herein, inline cryptography techniques implemented with a storage accelerator may enable encryption and decryption in a system with one or more hosts with multiple PCle functions and virtualized solid-state storage. In one example, for every I/O command sent from a host device to storage-accelerator-attached SSD(s), the storage accelerator maintains local I/O context information which has its own unique IO context ID. In one such example, the local I/O context information includes fields from the original I/O command (e.g., from the host submission queue entry), metadata associated with the I/O command, and additional information to enable the storage accelerator to process the I/O command and any data associated with the I/O command.

In one such example, the storage accelerator receives an I/O command from a host device and generates a modified I/O command with a modified data pointer. For example, the storage accelerator replaces the PRP in the command with a virtual PRP (VPRP) that provides an index or other reference to the I/O context information for that I/O command that is stored in accelerator memory. When the I/O command is a write command, the storage accelerator encrypts the data with a key corresponding to a virtual function associated with the I/O command and sends the encrypted data to the SSD. When the I/O command is a read command, the storage accelerator receives the encrypted data from the SSD (which may be in chunks and/or out of order) along with the modified data pointer. The storage accelerator may then determine the appropriate key and tweak value based on the modified data pointer (e.g., by accessing the I/O context information based on the modified data pointer), decrypt the data with the key and tweak value, and send the decrypted data to the host device without waiting for all data to be received from the SSD.

### Exemplary computing systems

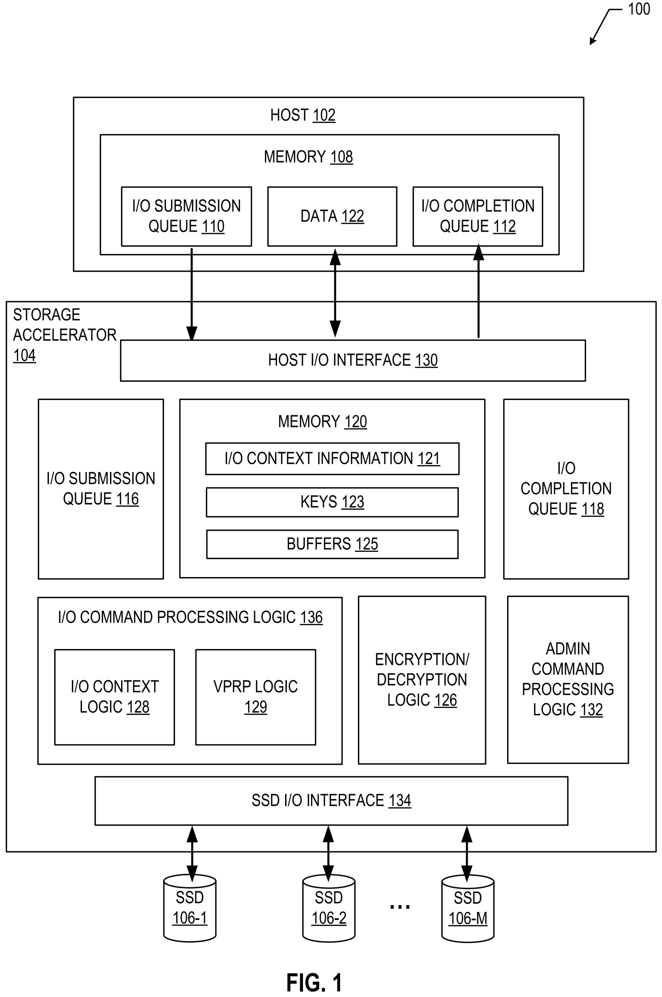

FIG. 1 illustrates an exemplary computing system 100 in which inline cryptography techniques may be implemented with a storage accelerator. The system 100 includes a host device 102, storage devices 106-1-106-M (of which storage devices 106-1, 106-2 and 106-M are shown), and a storage accelerator 104 between and coupled with the host device 102 and the storage devices 106-1-106-M.

The host device 102, which may also be referred to as a requester, is the source of I/O access requests to the storage devices 106-1-106-M. The host device 102 may be a device or system that initiates and/or manages data processing and storage operations. The host device 102 may include one or more processors (not shown in FIG. 1), including one or more central processing units (CPUs), one or more GPUs, one or more digital signal processors, and/or other processors. In some examples, the host device 102 may include a bridge or pass-through device that acts as a source of I/O requests received from other sources. For example, the host device 102 may be a device that receives requests over a network (e.g., NVMe over Fabrics (NVMe-oF) requests) and translates them to PCle requests that are provided to the storage accelerator 104. In one such example, the host device 102 may provide access to storage devices (e.g., storage devices 106-1-106-M) over a network fabric rather than being limited to direct PCIe connections. In other examples, the storage accelerator 104 may be implemented as a fabric-enabled storage target in a disaggregated storage system that may receive NVMe-oF requests.

The host device 102 also includes memory 108 and I/O interfaces (not shown in FIG. 1). The memory 108 represents memory resources for use by the host device 102 for storing data that the host device 102 processes and accesses to perform operations. The memory 108 is an example of computer-readable media that may store data 122 and/or instructions. Instructions stored in memory may include instructions of a driver, an operating system, an application, a virtual machine (VM), a tenant, and/or any other application. The memory 108 of the host device 102 may include various types of memory, such as DRAM, non-volatile memory, static random-access memory (SRAM), read-only memory (ROM), electronically erasable programmable ROM (EEPROM), and/or Flash memory. The memory 108 may include local and/or remote memory resources. In order to not clutter the drawing, a single box is shown to represent memory 108; however, the host device 102 may include multiple memories, which may be of different types of memory, store different types of information, and/or may have different access permissions.

The host device 102 includes an I/O submission queue 110 and an I/O completion queue 112 to facilitate the transmission and processing of I/O commands. The I/O submission queue 110 may represent an NVMe I/O submission queue and the I/O completion queue 112 may represent an NVMe I/O completion queue. Although a single I/O submission queue 110 and a single I/O completion queue 112 are shown in FIG. 1, the host device 102 may include multiple I/O submission and I/O completion queues. The I/O submission queue 110 and the I/O completion queue 112 may be buffers (e.g., circular buffers or other buffers) stored in memory 108. The host may utilize the I/O submission queue 110 to stage I/O commands (e.g., read commands and write commands), which are fetched and processed by the storage accelerator 104. Upon completion of these commands, the storage accelerator 104 places the results into an I/O completion queue, allowing the host device 102 to retrieve the status and outcome of the executed commands. In an example in which virtual functions are supported, the host device 102 may have a submission queue 110 and a completion queue 112 for each virtual function.

The storage accelerator 104 (which may also be referred to as a storage media accelerator, storage accelerator device, NVMe accelerator, storage interposer, or NVMe interposer) is coupled with and between the host device 102 and the storage devices 106-1-106-M. The storage accelerator 104 appears as a target and controller from the perspective of the host device 102 and appears as the host or requester/initiator from the perspective of the storage devices 106-1-106-M. The storage accelerator 104 includes I/O interface circuitry 130 for interfacing with a requester (e.g., the host device 102 or another source of I/O commands) and I/O interface circuitry 134 for interfacing with storage devices (e.g., the storage devices 106-1-106-M). The I/O interface circuitry 130 serves as the communication pathway between the storage accelerator 104 and the host device 102, facilitating data transfer and command processing operations. Similarly, the I/O interface circuitry 134 serves as the communication pathway between the storage accelerator 104 and storage devices 106-1-106-M. The interface circuitry typically includes a physical layer (PHY) that may implement standardized protocols such as SATA, PCle, and/or NVMe specifications, where the circuitry may translate electrical signals from the host device 102 and storage devices 106-1-106-M into commands or other information that can be processed by the storage accelerator 104.

The storage accelerator 104 also includes memory 120. The memory 120 is an example of computer-readable media that may store data and/or instructions. The memory 120 may represent one or more of DRAM, SRAM, ROM, EEPROM, and/or Flash memory. Although a single box is shown for the memory 120, the storage accelerator 104 may include multiple memory devices. In the example illustrated in FIG. 1, the memory 120 stores I/O context information 121, keys 123, and buffers 125. The I/O context information 121 represents information related to I/O commands received from the host device 102, which may facilitate inline encryption and decryption of data, as explained in more detail below. The keys 123 may represent a plurality of keys (which may also be referred to as cryptographic keys, encryption keys, or cipher keys) used by the storage accelerator to perform encryption and decryption of data. A key is typically a sequence of bits, where the length depends on the cryptographic algorithm used. The I/O context information 121 and keys 123 may be stored in any suitable data structures, such as tables, arrays, linked lists, trees, hash tables, stacks, queues, or other suitable data structures. In some examples, the keys 123 include a key corresponding to each virtual function or namespace. A namespace in NVMe is a collection of logical blocks that can be independently managed and accessed. Each namespace is identified by a unique identifier, which allows the NVMe controller to distinguish between different namespaces in a given storage device. In some examples, a unique namespace is assigned to each virtual function, and thus a key may be considered associated with a specific virtual function and a specific namespace for that virtual function. The buffers 125 represent temporary storage for the storage accelerator 104. For example, the buffers may temporarily store data to be encrypted, data to be decrypted, and/or data to be transmitted to the host device 102 and/or the storage devices 106-1-106-M. The I/O submission queue 116 and I/O completion queue 118 may be examples of buffers 125 stored in the memory 120. The I/O submission queue 116 is for staging (e.g., temporarily storing) I/O commands to be sent to the storage devices 106-1-106-M, and the I/O completion queue 118 is for staging completions from the storage devices 106-1-106-M to be sent to the host device 102.

In the example illustrated in FIG. 1, the storage accelerator 104 also includes admin command processing logic 132 to handle the processing of administrative (admin) commands in addition to I/O command processing logic 136 to handle the processing of I/O commands. Examples of NVMe admin commands include the Identify command, the Create and Delete I/O Submission Queue commands, the Get Features command, the Set Features command, among others. The I/O command processing logic 136 handles the processing of I/O commands, including read commands and write commands. The I/O command processing logic 136 includes I/O context logic 128 to extract I/O context information from I/O commands received from the host device 102 and store the I/O context information in an I/O context information data structure (e.g., the I/O context information 121), as explained in more detail below. The VPRP logic 129 includes logic to modify I/O commands by replacing the data pointer (e.g., PRP or other data pointer) with a modified data pointer (referred to herein as a VPRP), as explained in more detail below. The I/O context logic 128 and VPRP logic 129 may be implemented in hardware, software, firmware, or a combination of hardware, software, and/or firmware.

The storage accelerator 104 also includes encryption/decryption logic 126. The encryption/decryption logic 126 is configured to encrypt data received from the host device 102 using cryptographic keys before the data is sent to one or more storage devices 106-1-106-M, and to decrypt encrypted data that is read from the one or more storage devices 106-1-106-M before sending the decrypted data to the host device 102. This encryption/decryption logic 126 may implement various cryptographic algorithms and key management procedures to ensure data security. For example, the encryption/decryption logic 126 may implement cryptographic techniques including symmetric encryption algorithms such as Advanced Encryption Standard (AES), AES-XTS (XEX-based Tweaked-codebook mode with ciphertext Stealing), AES-GCM (Galois/Counter Mode), or any other suitable cryptographic technique to enable the storage accelerator 104 to encrypt and decrypt data. AES is an example of a symmetric block cipher that encrypts data using cryptographic keys of various lengths such as 128 bits, 192 bits, 256 bits, or another length. AES-XTS is an AES technique that incorporates a "tweak" value, where the tweak value may be derived from the starting LBA and/or offset relative to the starting LBA, and where the tweak value is an additional input parameter to a cryptographic algorithm that modifies the encryption process to produce different ciphertext for the same data when encrypted in different contexts (e.g., for different starting LBAs and offsets).

As mentioned above, M storage devices 106-1-106-M are coupled with the host device 102 via the storage accelerator 104, where M is a positive integer. In one example, the storage devices 106-1-106-M may be considered accelerator-attached SSDs (e.g., due to a physical link between the storage accelerator 104 and the storage devices 106-1-106-M). The storage accelerator 104 may enable coupling storage devices 106-1-106-M with different properties and from different vendors with the host device 102. The storage devices 106-1-106-M are non-volatile storage devices that utilize integrated circuits to store data persistently. In some examples, the storage devices 106-1-106-M include flash memory (e.g., NOR Flash or NAND Flash memory) to store data. The storage devices 106-1-106-M may have various form factors and interface types. In some examples, the storage devices 106-1-106-M use NVMe as the storage protocol for interfacing with the storage accelerator 104. According to examples, NVMe SSDs may be designed to work over PCle connections (e.g., to use the PCle standard as the physical and logical protocol for transmitting data between the storage accelerator 104 and the storage devices 106-1-106-M). Although FIG. 1 illustrates an example in which multiple storage devices 106-1-106-M are coupled with the storage accelerator 104, different systems may include one or more storage devices coupled with an accelerator (e.g., 1, 2, 3, 4, 8, or another number of storage devices).

Thus, the system 100 of FIG. 1 represents a system with a host device 102, a storage accelerator 104, and storage devices 106-1-106-M in which inline cryptography techniques may be implemented.

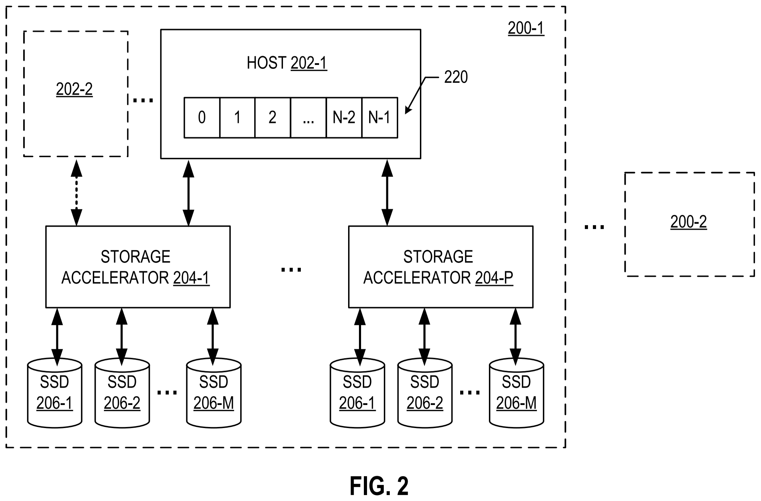

FIG. 2 illustrates another exemplary computing system in which inline cryptography techniques may be implemented with a storage accelerator. FIG. 2 illustrates a system 200-1 including a host device 202-1 and storage accelerators 204-1-204-P (where P is a positive integer greater than 1). The host device 202-1 may be an example of the host device 102, discussed above. The storage accelerators 204-1-204-P may be examples of the storage accelerators 104, discussed above. Each of the storage accelerators 204-1-204-P are coupled with SSDs 206-1-206-M (of which 206-1, 206-2, and 206-M are shown, and where M is a positive integer greater than 1). The SSDs 206-1-206-M may be examples of the storage devices 106-1-106-M. In some examples, the system may include multiple hosts, each coupled with multiple storage accelerators. For example, FIG. 2 shows that there may be an additional system 200-2, which may be the same as or similar to the system 200-1. In some examples, a given storage accelerator may be coupled with multiple hosts. For example, FIG. 2 shows that there may be an additional host device 202-2 coupled with the storage accelerator 204-1. A given host device may have (e.g., run, execute, or host) multiple VMs.

The host device 202-1 may be coupled with the storage accelerators 204-1-204-P with PCle links. In the example illustrated in FIG. 2, the host device 202-1 includes N PCle ports 220 (e.g., ports 0 to N-1, where N is a positive integer greater than 1). In one such example, the PCIe ports 220 may be provided with a PCIe switch. In some examples, each of the storage accelerators may be coupled with the host via one of the PCIe ports 220. For example, the storage accelerator 204-1 may be coupled with the host device 202-1 via the PCIe port 0, and the storage accelerator 204-P may be coupled with the host device 202-1 via the PCIe port N-1. In another example, each of the storage accelerators 204-1-204-P may be coupled with multiple (e.g., 2) PCle ports 220 of the host device 202-1. For example, the storage accelerator 204-1 may be coupled with the host device 202-1 via the PCIe ports 0 and 1, and the storage accelerator 204-P may be coupled with the host device 202-1 via the PCIe ports N-2 and N-1.

Thus, the system of FIG. 2 represents a system with one or more host devices 202-1 and 202-2, one or more storage accelerators 204-1-204-P, and SSDs coupled with each storage accelerator 204-1-204-P, where each of the storage accelerators 204-1-204-P may implement inline cryptography techniques.

### Exemplary method for implementing inline cryptography techniques with a storage accelerator

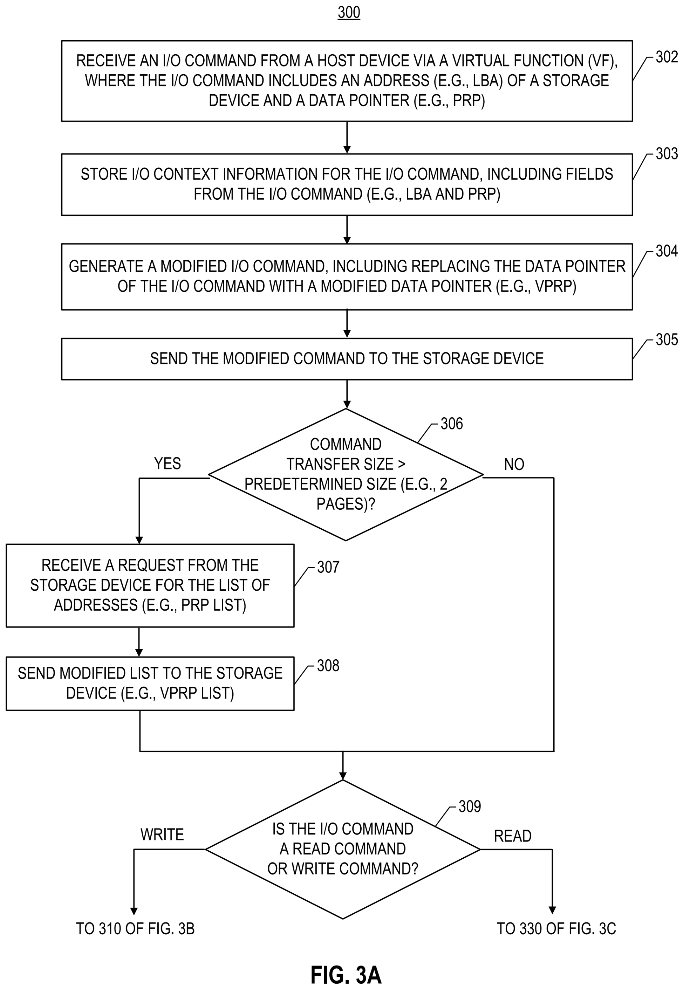

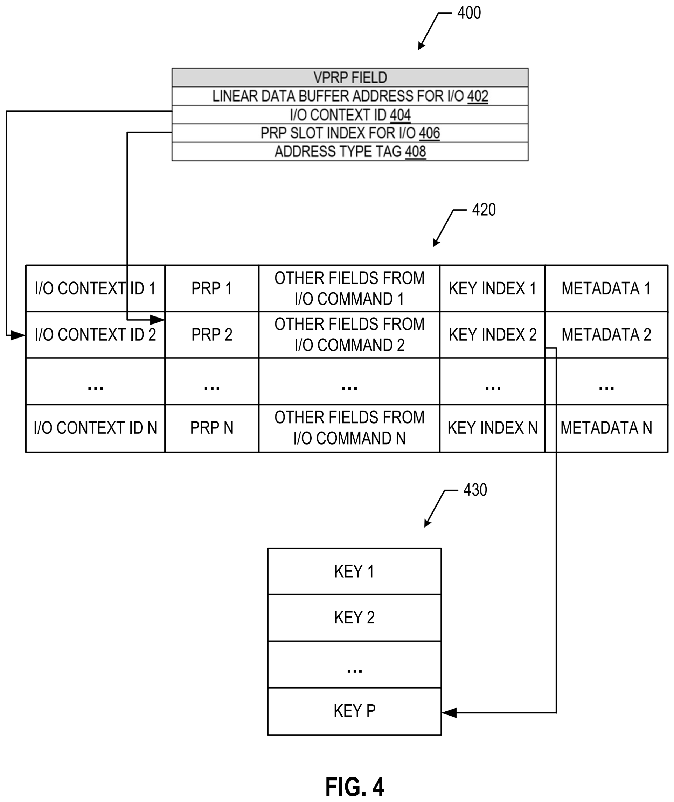

FIGS. 3A-3C depict flow charts illustrating an example of a method 300 for implementing inline cryptography techniques with a storage accelerator. The method 300 may be performed by a storage accelerator (e.g., with the I/O context logic 128, the VPRP logic 129, the encryption/decryption logic 126, and/or other logic of the storage accelerator 104 of FIG. 1). The method 300 may be implemented with hardware, firmware, and/or software. The following descriptions of the method 300 refer to FIG. 4 to help clarify the method 300. FIG. 4 illustrates an example of an I/O context table, modified data pointer, and key table. The following descriptions of the method 300 also refer to elements of the system 100 of FIG. 1.

The method 300 begins with receiving an I/O command from a host device via a virtual function, in 302. Examples of an I/O command include a read command and a write command. The I/O command includes an address (e.g., an LBA) of a storage device and a data pointer (e.g., a PRP or SGL), where the data pointer identifies or is an address in host memory where data is to be written to (for a read command) or read from (for a write command). A PRP includes a direct physical memory address (PRP1 and PRP2) embedded within the NVMe command, while a PRP list includes a pointer (e.g., in PRP2) to a separate memory location in host memory that stores an array of additional physical addresses for larger transfers. An SGL contains descriptors embedded in the I/O command that can either hold direct address information or point to a scatter-gather structure in host memory. Referring to FIG. 1, in one example in which an NVMe protocol is used, receiving an I/O command involves the host device 102 placing the I/O command in the I/O submission queue 110 and ringing the doorbell. Ringing the doorbell refers to writing to a memory-mapped I/O (MMIO) register (referred to as a doorbell register) to notify the storage accelerator 104 that the I/O command has been added to the I/O submission queue 110. The storage accelerator 104 may then retrieve the I/O command from the I/O submission queue 110 and store the I/O command in its own queue (e.g., the submission queue 116). Receiving an I/O command via a virtual function may refer to the command being submitted to a submission queue assigned to that virtual function and writing to a doorbell register assigned to that virtual function.

Referring again to FIG. 3A, in response to receiving the I/O command, the method involves storing I/O context information for the I/O command, in 303. Storing I/O context information involves storing fields from the I/O command, such as the starting LBA, the data pointer (e.g., PRP or other data pointer), the command ID (e.g., the host command ID from the I/O command), and namespace ID in a memory of the accelerator. For example, referring to FIG. 1, the I/O context logic 128 may store the I/O context information for the I/O command in the I/O context information 121, which may represent a table or other data structure for storing I/O context information for I/O commands being handled by the storage accelerator 104.

Storing the I/O context information may involve assigning an I/O context ID to the I/O command, where the I/O context ID is an ID used internally in the storage accelerator to identify the I/O command. The I/O context ID may be stored with the I/O context information, and in some cases, may function as an index or other reference to enable accessing the I/O context information for the I/O command associated with that I/O context ID. In some examples, storing I/O context information may also involve storing a key index to access a key used for encrypting and decrypting the data accessed by the I/O command, and metadata such as the virtual function ID, timestamps associated with the I/O command, and/or other information to enable inline encryption and decryption of the data accessed by the I/O command.

FIG. 4 illustrates an example of an I/O context table 420 that may be stored in accelerator memory and that includes I/O context information for I/O commands. In the example illustrated in FIG. 4, the I/O context table includes multiple entries (e.g., N entries of which entries 1, 2, and N are shown and where N is a positive integer greater than 1), where each entry in the I/O context table includes an I/O context ID, PRP, other fields from the I/O command, a key index, and metadata. The I/O context ID in the I/O context table 420 may be an ID assigned by the storage accelerator 104 to the I/O command to facilitate access to the other I/O context information. The PRP may represent any data pointer information, such as the PRP1 and PRP2 fields from the I/O command, an SGL field from the I/O command, or other data pointer information to enable the storage accelerator 104 to retrieve or store data in location(s) specified in the I/O command. Other fields from the I/O command may include the command ID, the namespace ID, the starting LBA, the number of logical blocks to be transferred, and/or other fields from the I/O command from the host device 102. The metadata in the I/O context table may include any other information to enable the storage accelerator to perform inline cryptography techniques, such as the virtual function associated with the I/O command.

FIG. 4 also depicts a key table 430, which may store a plurality of keys (e.g., P keys, where P is a positive integer) corresponding to virtual functions. In the example illustrated in FIG. 4, each entry of the I/O context table 420 includes a key index to a key in the key table 430, as shown by the arrow from the key index 2 to the key P. Note that FIG. 4 depicts the I/O context table 420 as having N entries and the key table 430 as having P entries to illustrate that a plurality of entries is available in those data structures, and that the use of N and P in FIG. 4 is independent from the use of N and P in FIG. 2. Although FIG. 4 depicts the I/O context table 420 and the key table 430 as tables (which may be stored as one or more arrays or other data structures in the accelerator memory), any suitable data structure may be used to store I/O context information and keys. Additionally, although the I/O context information is shown in FIG. 4 as being stored in one table, various elements of the I/O context information may be stored in separate data structures.

Referring again to FIG. 3A, the method involves generating a modified I/O command, including replacing the data pointer of the I/O command with a modified data pointer, in 304. For example, referring to FIG. 1, the VPRP logic 129 replaces the PRP or other data pointer in the I/O command received from the host device 102 with a modified data pointer (e.g., VPRP). In one example, the modified data pointer includes a reference to the I/O context information to enable the storage accelerator to access the stored I/O context information based on the reference. A reference may be any data, identifier, or addressing information that enables locating and accessing a specific entry, element, or data structure within a memory system, such as an index, a memory address, an offset, or other reference. In one example, the reference to the I/O context information may be the I/O context ID. The modified data pointer may also include a reference to the starting LBA and an offset relative to or within the starting LBA, a reference to the data pointer, and an address type tag. In one example, generating a modified I/O command also involves replacing the command ID (e.g., host command ID) with the I/O context ID.

For example, FIG. 4 depicts an example of a modified data pointer 400 (referred to as a VPRP). As can be seen in the example depicted in FIG. 4, the modified data pointer 400 includes multiple fields, including a linear data buffer address for I/O 402 (which may provide a starting LBA index and offset), an I/O context ID 404 (which may provide a direct index to local I/O context information stored in the accelerator memory, as shown by the arrow to an I/O context ID 2 of the I/O context table 420), a PRP slot index for I/O 406 (which may provide an index of the PRP slot where the corresponding host PRP is stored, as shown by the arrow to PRP 2 of the I/O context table 420), and an address type tag 408. In one example, the address type tag 408 is to identify the address type, including one of: a PRP data buffer address, a PRP list address, a metadata pointer, a command, a completion, and an interrupt (e.g., MSI-X). In one such example, the address type tag 408 enables the storage accelerator to determine what content is being accessed when processing a TLP.

In one example, when generating the modified I/O command with the modified data pointer, the storage accelerator 104 replaces PRP1 with a VPRP1 and replaces PRP2 with a VPRP2. VPRP1 and VPRP2 may include fields such as shown in the modified data pointer 400. In one such example, VPRP1 may have an address type tag 408 indicating the address type is PRP and an offset of 0x0. In one example, the values in VPRP2 may depend on the transfer size indicated in the command. For example, the address type tag 408 and offset may be different depending on whether or not the I/O command is for a multi-page transfer using a PRP list. In one such example, if the command transfer size is less than or equal to a predetermined amount (e.g., less than or equal to two pages, e.g., less than or equal to 8kB), then in one example, the address type tag indicates that the address is for a PRP and the offset is 0x1000 (indicating that the PRP is for the next page of data). If the transfer size is greater than the predetermined amount (e.g., greater than two pages, e.g., greater than 8kB), then the address type tag indicates that the address is for a PRP list with an offset of 0x0.

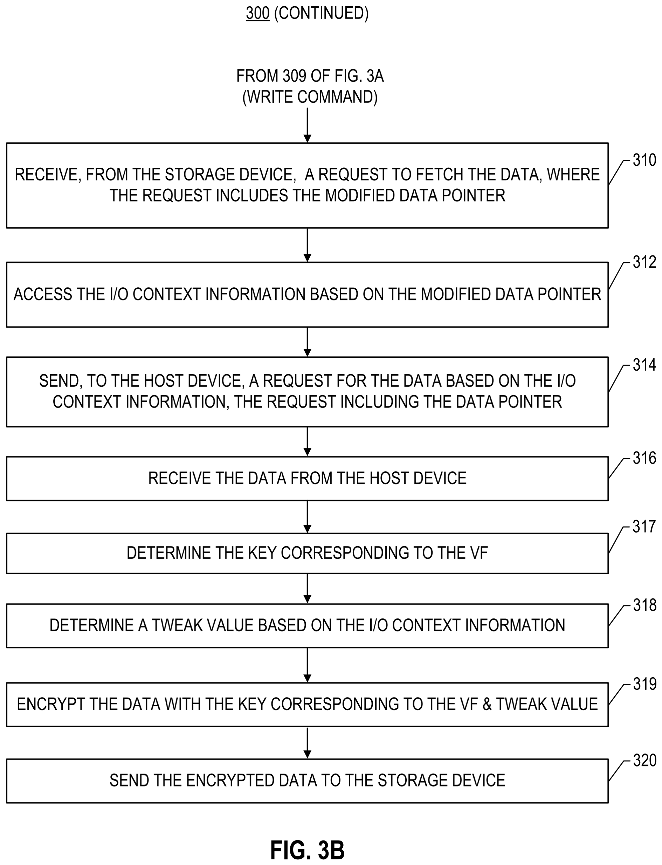

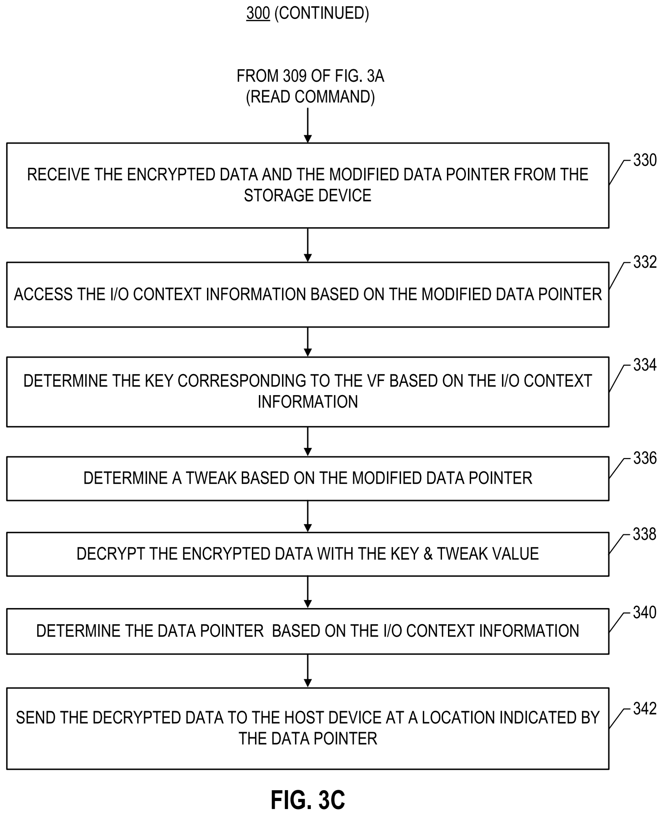

Referring again to FIG. 3A, the method 300 involves sending the modified command to the storage device, in 305. Sending the modified I/O command may involve writing to a doorbell register for the storage device to cause the storage device to read the modified I/O command. After sending the I/O command to the storage device, if the I/O command involves a transfer that is greater than 2 pages (in 306), the storage device may request a list of addresses for the command (e.g., a PRP list). For example, if the command specifies a PRP list for multi-page data transfers, the storage device may issue a memory read request TLP to fetch the PRP list. Thus, in one example, the method 300 involves receiving a request from the storage device for a list of addresses, in 307. Typically, the memory read request TLP to fetch a PRP list would include the address specified in the PRP2 field of the I/O command from the host. In contrast, in one example where the data pointer was replaced with a modified data pointer (e.g., PRP2 was replaced with VPRP2), the memory read request TLP includes the modified data pointer. Instead of providing the PRP list from the host, the storage accelerator may provide a modified list to the storage device in 308. For example, the storage accelerator may generate a VPRP list, where each element in the VPRP list has the format of a VPRP (e.g., such as the modified data pointer 400 of FIG. 4). In one such example, each element in the VPRP list has an address type tag that indicates it is a PRP with the appropriate offset. For example, the first element in the VPRP list may have an offset of N (e.g., 0x0 or another base offset), the second element in the VPRP list may have an offset of N + 0x1000, the third element in the VPRP list may have an offset of N + 0x2000, and so forth. Thus, in some examples, entries within a VPRP list may have offsets of incrementally increasing values, where a first entry may include a base offset and subsequent entries may include offsets determined by adding one or more multiples of a predefined memory interval to the base offset. Subsequent operations depend on whether the I/O command is a read command or a write command (as indicated by the decision block 309 of the flowchart in FIG. 3A). FIG. 3B illustrates operations for if the I/O command is a write command, and FIG. 3C illustrates operations for if the I/O command is a read command.

Referring now to FIG. 3B, if the I/O command is a write command, the method 300 involves receiving, from the storage device, a request to fetch the data, in 310. For example, after the storage device receives the write command, the storage device may send a request (e.g., in the form of a memory read TLP) for the data to be written. In one such example, the request for the data includes the modified data pointer. The storage accelerator may then access the I/O context information based on the modified data pointer, in 312. For example, referring to FIG. 4, the modified data pointer may include a reference to the data pointer from the original I/O command (e.g., the PRP slot index for I/O 406).

Referring again to FIG. 3B, the storage accelerator may then send, to the host device, a request for the data based on the I/O context information, in 314. For example, the storage accelerator may send a request (e.g., in the form of a memory read TLP) for the data to be written, where the request includes the data pointer from the I/O command. The storage accelerator may then receive the data from the host device, in 316. Receiving data from the host device may involve, for example, receiving one or more completion TLPs with the requested data.

The method 300 may then involve determining the key corresponding to the virtual function associated with the I/O command, in 317. Determining the key may involve accessing the key from a plurality of keys based on the virtual function via which the I/O command was sent. For example, referring to FIG. 4, the storage accelerator may access a key from the key table 430 based on the virtual function and/or based on the key index in the entry of the I/O context table 420 associated with the I/O command. In some examples, the method 300 may also involve determining a tweak value based on the I/O context information, in 318. Determining the tweak value may involve providing one or more values related to the I/O context as inputs to an algorithm (which may be implemented with circuitry). For example, determining the tweak value may involve an algorithm including a hash, XOR, and/or other mathematical function, and may use one or more of the starting LBA, offset, a timestamp, a namespace ID, a virtual function, and/or other context information as inputs. The storage accelerator may then encrypt the data with the key corresponding to the virtual function and using the tweak value, in 319. In other examples, encryption of the data may not involve the use of a tweak value.

Referring again to FIG. 3B, the method 300 may then involve sending the encrypted data to the storage device, in 320. Sending the encrypted data may involve, for example, sending one or more completion TLPs with the encrypted data to the storage device.

Referring now to FIG. 3C, if the I/O command is a read command, the method 300 involves receiving the encrypted data and the modified data pointer from the storage device, in 330. Receiving the encrypted data may involve, for example, receiving one or more memory write TLPs with the encrypted data and the modified data pointer. The data may be received by the storage accelerator in chunks (e.g., with multiple memory write TLPs) and/or out of order. In one such example, each memory write TLP may include the modified data pointer with a reference to the I/O context information for that I/O command. Each memory write TLP may also include an offset. The method 300 may then involve accessing the I/O context information based on the modified data pointer, in 332. For example, referring to FIG. 4, the storage accelerator may access an entry of the I/O context table 420 associated with the I/O command based on the I/O context ID 404 in the modified data pointer 400.

Referring again to FIG. 3C, the method 300 may involve determining the key corresponding to the virtual function based on the I/O context information, in 334. Determining the key may involve accessing the key from a plurality of keys based on a key index or other reference. For example, referring to FIG. 4, the storage accelerator may access a key from the key table 430 based on the key index in the entry of the I/O context table 420 associated with the I/O command. In some examples, the method 300 may also involve determining a tweak value based on the modified data pointer, in 336. As discussed above with respect to determining the tweak value for encryption, a tweak value may be based on one or more I/O context values associated with the data. The method 300 then involves decrypting the encrypted data with the key and tweak value, in 338. In other examples, decryption of the data may not involve the use of a tweak value. Decryption of the data may involve any suitable decryption technique, as discussed above.

The method 300 involves determining the data pointer based on the I/O context information, in 340. Referring to FIG. 4, determining the data pointer may involve accessing the data pointer in the entry of the I/O context table 420 associated with the I/O command using a reference, such as the PRP slot index for I/O 406. The method 300 also involves sending the decrypted data to the host device at a location indicated by the data pointer, in 342. Sending the decrypted data may involve sending completion TLPs with the decrypted data. Decrypting and sending the data may involve decrypting and sending partial data as it is received by the storage accelerator, without waiting for all the data to be received before decryption.

Thus, FIGS. 3A-3C illustrate a method 300 of implementing inline cryptography techniques in a storage accelerator. In one example, the storage accelerator stores I/O context information for I/O commands, and replaces host address pointers (e.g., PRPs and/or other addresses) associated with the original host I/O command with modified data pointers (e.g., VPRPs). The storage accelerator can then retrieve the I/O context information associated with the modified data pointer (e.g., via fast table lookups) to enable encryption and decryption without a significant impact to I/O latency.

### Exemplary TLP flow for a write command

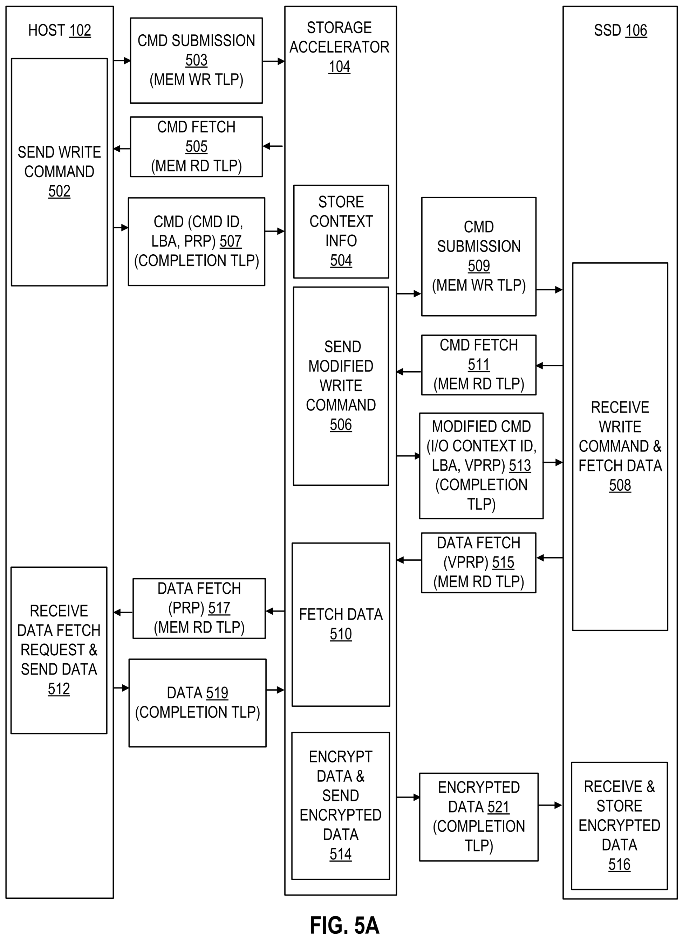

FIG. 5A is a diagram of an example method of performing inline cryptography techniques, including a TLP flow for an NVMe write command. In the example illustrated in FIG. 5A, the host device 102 sends a write command to the storage accelerator 104, in 502. In the example illustrated in FIG. 5A, to send the write command, the host device 102 sends a memory write TLP (command submission 503) to the storage accelerator, where memory write TLP includes an address in the header for the submission queue's doorbell register and a tail pointer value in the data payload that indicates where the command is in the submission queue (e.g., the submission queue 110 of FIG. 1). The storage accelerator 104 receives the memory write TLP for the command submission 503 and responds by sending a memory read TLP (command fetch 505) with the address of the submission queue entry. The host device 102 receives the memory read TLP for the command fetch 505 and responds by sending a completion TLP with the NVMe write command in the data payload (command 507). The write command includes the command ID, LBA, and data pointer (e.g., PRP) in addition to other fields.

The storage accelerator 104 receives the write command and stores I/O context information for the write command, in 504. For example, referring to FIG. 1 and FIG. 4, the storage accelerator 104 stores I/O context information 121 in the memory 120, where the I/O context information may be stored in a table or other data structure, and where the I/O context information 121 includes the I/O context ID, PRP, other fields from the I/O command, a key index, metadata, and/or other information, such as shown in the I/O context table 420 of FIG. 4.

The storage accelerator then generates and sends a modified write command to the storage device 106, in 506. Generating a modified write command may involve replacing the data pointer in the write command received from the host device 102 with a modified data pointer, such as a VPRP having the format of the modified data pointer 400 of FIG. 4. To send the modified write command, the storage accelerator 104 may send a memory write TLP (command submission 509) to the storage device that includes the address for SQ doorbell register The storage device 106 receives the memory write TLP for the command submission 509 and responds by sending a memory read TLP (command fetch 511) with the address of the submission queue entry, in 508. The storage accelerator 104 receives the memory read TLP for the command fetch 511 and responds by sending a completion TLP with the modified write command in the data payload (modified command 513). The modified write command includes the I/O context ID (e.g., the host command ID is replaced with the I/O context ID), LBA, and modified data pointer (e.g., VPRP) in addition to other fields. The storage device 106 receives the modified write command and sends a memory read TLP (data fetch 515) with the modified data pointer to the storage accelerator 104 to fetch the data for the modified write command.

The storage accelerator 104 receives the memory read TLP with the modified data pointer and sends a memory read TLP (data fetch 517) to the host device 102, in 510. In one such example, the storage accelerator 104 accesses the I/O context information for the write command based on the modified data pointer to retrieve the data pointer from the original I/O command. For example, referring to FIG. 4, the storage accelerator may use the I/O context ID 404 in the modified data pointer 400 to access the I/O context information for the write command in the I/O context information table 420. The storage accelerator 104 may then use the information in the I/O context information table 420 to fetch the data from the host device 102. For example, the storage accelerator may determine the PRP from the original write command from the I/O context information.

Referring again to FIG. 5A, the host device 102 receives the memory read TLP for the data fetch 517 and sends one or more completion TLPs with the requested data (data 519), in 512. The storage accelerator 104 receives the data, encrypts the data, and sends the encrypted data to the storage device, in 514. To encrypt the data, the storage accelerator 104 may use a key corresponding to the virtual function via which the write command was sent. In some examples, the storage accelerator may further use a tweak value based on other I/O context information associated with the write command. To send the encrypted data, the storage accelerator may send one or more completion TLPs with the encrypted data (encrypted data 521) to the storage device 106. Thus, in the example illustrated in FIG. 5A, the data sent from the storage accelerator 104 to the storage device 106 is encrypted, adding an additional layer of protection.

The storage device 106 receives the encrypted data and stores the encrypted data in its storage media, in 516. Although FIG. 5A depicts a single completion TLP with data 519 and a single completion TLP with encrypted data 521, the host device 102 typically sends the data with a plurality of completion TLPs and the storage device 106 may send the encrypted data with a plurality of completion TLPs. In one such example, the storage accelerator may encrypt and send the data from each TLP without waiting for all the data to be received from the host device.

### Exemplary TLP flow for a read command

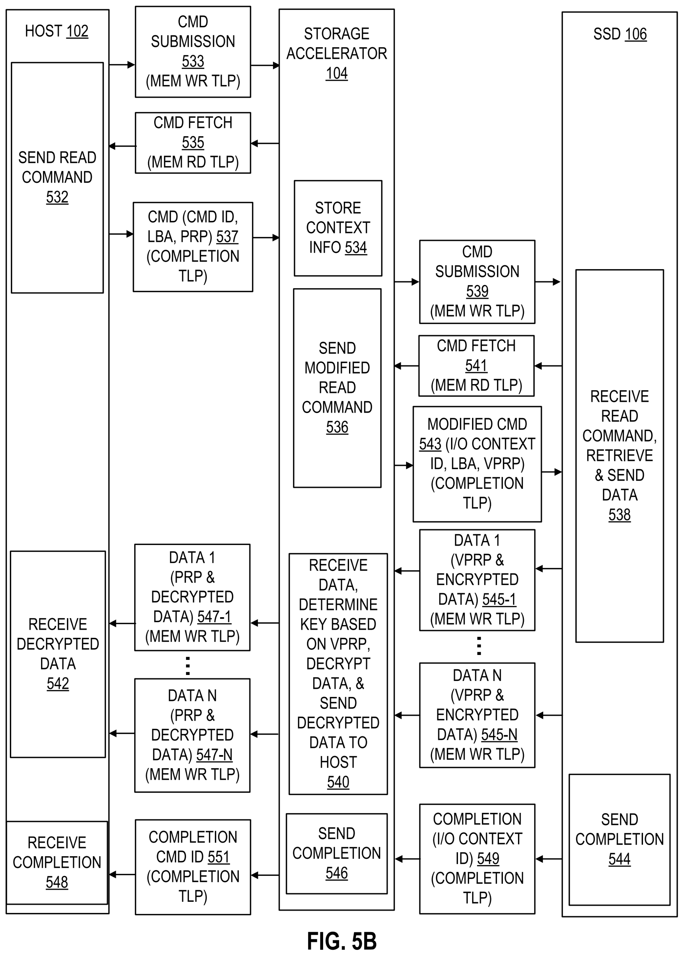

FIG. 5B is a diagram of an example method of performing inline cryptography techniques, including a TLP flow for an NVMe read command. In the example illustrated in FIG. 5B, the host device 102 sends a read command to the storage accelerator 104, in 532. In the example illustrated in FIG. 5B, to send the read command, the host device 102 sends a memory write TLP (command submission 533) to the storage accelerator 104 that includes an address in the header for the submission queue's doorbell register and a tail pointer value in the data payload that indicates where the command is in the submission queue (e.g., the submission queue 110 of FIG. 1). The storage accelerator 104 receives the memory write TLP for the command submission 533 and responds by sending a memory read TLP (command fetch 535) with the address of the submission queue entry. The host device 102 receives the memory read TLP for the command fetch 535 and responds by sending a completion TLP with the NVMe read command in the data payload (command 537). The read command includes the command ID, LBA, and data pointer (e.g., PRP) in addition to other fields.

The storage accelerator 104 receives the read command and stores I/O context information for the read command, in 534. For example, referring to FIG. 1 and FIG. 4, the storage accelerator 104 stores I/O context information 121 in the memory 120, where the I/O context information may be stored in a table or other data structure, and where the I/O context information 121 includes the I/O context ID, PRP, other fields from the I/O command, a key index, metadata, and/or other information, such as shown in the I/O context table 420 of FIG. 4.

The storage accelerator then generates and sends a modified read command to the storage device 106, in 536. Generating a modified read command may involve replacing the data pointer in the read command received from the host device 102 with a modified data pointer, such as a VPRP having the format of the modified data pointer shown 400 of FIG. 4. To send the modified read command, the storage accelerator 104 may send a memory write TLP (command submission 539) to the storage device 106 that includes the address for SQ doorbell register. The storage device 106 receives the memory write TLP for the command submission 539 and responds by sending a memory read TLP (command fetch 541) with the address of the submission queue entry. The storage accelerator 104 receives the memory read TLP for the command fetch 541 and responds by sending a completion TLP with the modified read command in the data payload (modified command 543). The modified read command includes the I/O context ID, LBA, and modified data pointer (e.g., VPRP) in addition to other fields. The storage device 106 receives the modified read command 543, retrieves the data from its storage media, and sends the data to the storage accelerator 104, in 538. To send the data, the storage device 106 may send one or more completion TLPs with the modified data pointer in its header and the data in its data payload to the storage accelerator (shown as data 1 545-1 and data N 545-N to represent N completion TLPs with encrypted data). The data transmitted from the storage device 106 to the storage accelerator 104 is encrypted data.

The storage accelerator 104 receives the data, determines a key to use to decrypt the data, decrypts the data, and sends the decrypted data to the host, in 540. To decrypt the data, the storage accelerator 104 determines which key to use based on information in the modified data pointer. For example, referring to FIG. 4, the modified data pointer includes a reference (e.g., the I/O context ID 404 or other reference) to the I/O context information for the read command, and the storage accelerator accesses the I/O context information based on the reference. The I/O context information shown in FIG. 4 also includes a key index. In one such example, the storage accelerator 104 uses the key index to access the appropriate key from the key table 430. In some examples, the storage accelerator 104 may also determine a tweak value based on I/O context information for the read command, such as the starting LBA, offset of the data for the particular TLP, and/or other I/O context information. To send the decrypted data, the storage accelerator 104 sends one or more memory write TLPs with the data pointer in the header and the decrypted data in the data payload (shown as data 1547-1 and data N 547-N to represent N completion TLPs with decrypted data). In one example, the storage accelerator 104 determines the PRP to include in the memory write TLPs for data delivery based on the modified data pointer. For example, referring to FIG. 4, the modified data pointer 400 includes a data pointer index to access the data pointer (e.g., the PRP slot index for I/O 406). The host device 102 receives the decrypted data, in 542.

After sending all the data, the storage device 106 may send a completion TLP to indicate completion of the read command (completion 549), in 544. In one example, the completion 549 includes the I/O context ID. Sending the completion may involve writing a completion queue entry (e.g., writing to the I/O completion queue 118 of FIG. 1). In response to receiving the completion 549, the storage accelerator 104 sends a completion TLP to indicate completion of the command to the host device 102 (completion 551), in 546. Sneding the completion to the host device 102 may involve writing a completion queue entry (e.g., writing to the I/O completion queue 112 of FIG. 1). In one example, the completion 551 includes the command ID from the original I/O command. The host device 102 receives the completion, in 548.

Thus, FIGS. 5A and 5B illustrate examples of TLP flows for read and write commands in a system implementing inline cryptography techniques with a storage accelerator. Other TLP flows for read and write commands may include the exchange of different or additional TLPs. For example, the examples illustrated in FIGS. 5A and 5B depict flows for commands that specify PRPs (rather than PRP lists or SGLs). In an example in which a PRP list is specified, the flow may involve an additional exchange of TLPs to fetch the PRP list. For the memory read flow in FIG. 5B, the memory write TLPs received from the storage device 106 with the encrypted data may be received out of order. In one such example, the storage accelerator 104 decrypts the data based on information in the modified data pointer and sends the decrypted data as it is received instead of waiting to receive all the data-containing TLPs before decrypting the data. Decryption of the data as it is received may enable higher efficiency than store-forward cryptography techniques. Furthermore, techniques for the encryption and decryption of data that do not require buffering all the data enable lower cost solutions due to needing less on-chip and/or off-chip memory.

### Exemplary SSD

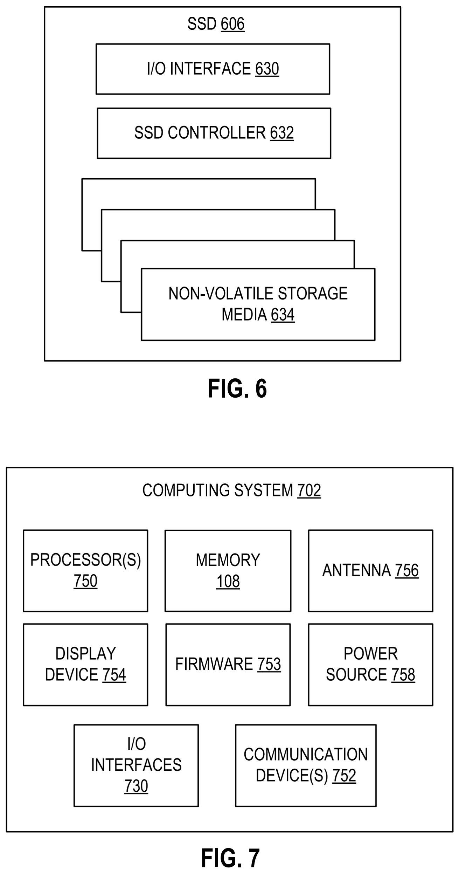

FIG. 6 illustrates an exemplary solid-state drive (SSD) which may be included in a system implementing inline cryptography techniques in a storage accelerator. The SSD 606 includes I/O interface circuitry 630 for interfacing with a requester (e.g., the storage accelerator 104 of FIG. 1 or another source of I/O commands). The SSD 606 also includes an SSD controller 632. The SSD controller 632 manages storage operations in the SSD 606, including translation between logical block addresses from the host and physical storage locations through its firmware and translation layer. The SSD controller 632 may further handle wear leveling, garbage collection, error correction, bad block management, and/or other SSD management tasks. In some examples, the SSD 606 may include a DRAM cache (not shown in FIG. 6) to provide temporary high-speed storage for frequently accessed data, metadata, and mapping tables. Other SSDs may be DRAM-less. The SSD 606 includes non-volatile storage media 634, which may include NAND flash storage or other non-volatile storage media. In one example, the SSD 606 may include a plurality of NAND dies to provide the non-volatile storage media 634 of the SSD.

### Exemplary host device

FIG. 7 illustrates an exemplary computing system, which may represent a host device in a system in which inline cryptography techniques are implemented with a storage accelerator. The computing system 702 may be an example of the host device 102. In some examples, the computing system may be or include a system-on-a-chip (SoC) device. The computing system 702 may include one or more processors 750, such as CPUs, GPUs, digital signal processors (DSPs), microcontrollers, application-specific integrated circuits (ASICs), field-programmable gate arrays (FPGAs), network processors, audio processors, image processors, cryptographic processors, artificial intelligence accelerators, tensor processing units (TPUs), and/or other processors. The computing system includes memory 108, described above with respect to FIG. 1. The memory 108 may store data and queues (e.g., submission queues) for enabling the transmission of I/O commands to a storage accelerator (such as the storage accelerator 104 of FIG. 1).

The computing system 702 includes I/O interfaces 730 such as Universal Serial Bus (USB), Thunderbolt, Serial Advanced Technology Attachment (SATA), Peripheral Component Interconnect Express (PCIe), Non-Volatile Memory Express (NVMe), Compute Express Link (CXL), Serial Peripheral Interface (SPI), Inter-Integrated Circuit (I2C), Ethernet, wireless communication interfaces including Wi-Fi and Bluetooth, High-Definition Multimedia Interface (HDMI), DisplayPort, and various proprietary or industry-standard communication protocols for connecting peripheral devices, storage systems, and network components. The I/O interfaces 730 include an I/O interface to facilitate communication with a storage accelerator, such as the storage accelerator 104 of FIG. 1.

The computing system 702 includes firmware 753, which includes executable code stored in non-volatile memory that configures and controls hardware components during initialization and runtime operations of the system 702. The computing system 702 includes one or more power sources 758, which are components configured to provide electrical energy to support the operation of the computing system. Power sources 758 may include an alternating current (AC) power supply and a battery. The computing system 702 may include one or more antenna 756 configured to enable wireless communication with external devices or networks. The computing system 702 may include one or more communication devices 752 comprising wireless and wired communication components such as Wi-Fi transceivers, Bluetooth modules, cellular modems, Ethernet controllers, or radio frequency communication circuits for enabling data exchange with external devices, networks, and communication systems. The communication devices 752 may facilitate various communication protocols and standards for transmitting and receiving data across different network infrastructures and communication mediums. The computing system 702 may include a display device 754 comprising visual output components such as liquid crystal displays (LCD), light-emitting diode (LED) displays, or organic light-emitting diode (OLED) displays, for presenting graphical information, text, images, and user interface elements to a user.

### Select examples

Example 1 provides a method of performing inline cryptography in a storage accelerator, where the storage accelerator is to couple with a host device and a storage device, and where the method includes receiving an I/O command from the host device via a virtual function, where the I/O command includes an address (e.g., LBA) of the storage device and a data pointer (e.g., SGL, PRP, or other data pointer); sending a modified I/O command to the storage device, where the modified I/O command includes a modified data pointer; in response to a determination that the I/O command is a write command: receiving the data from the host device, encrypting the data with a key corresponding to the virtual function, and sending encrypted data to the storage device; and in response to a determination that the I/O command is a read command: receiving the encrypted data and the modified data pointer from the storage device, determining the key based on the modified data pointer, decrypting the encrypted data based on the key, and sending the decrypted data to the host device.

Example 2 provides the method of example 1, further including in response to receipt of the I/O command: storing, in a memory of the storage accelerator, context information related to the I/O command, where: the modified data pointer includes a reference (e.g., index or other reference).

Example 3 provides the method of example 2, where: the context information includes an I/O context ID for the I/O command, and the reference to the context information in the modified data pointer includes the I/O context ID.

Example 4 provides the method of any one of examples 2-3, where: the memory is to store a plurality of keys corresponding to virtual functions, the context information includes a key index to access the key from the plurality of keys.

Example 5 provides the method of any one of examples 2-4, where: the context information includes the data pointer from the I/O command, and the modified data pointer includes a data pointer index to access the data pointer.

Example 6 provides the method of any one of examples 2-5, where: the context information includes virtual function information to identify the virtual function via which the I/O command was received.

Example 7 provides the method of any one of examples 2-6, where: the address includes an LBA (e.g., starting LBA), the context information includes the starting LBA, and the modified data pointer includes an LBA index to access the starting LBA, and an offset relative to the starting LBA.

Example 8 provides the method of example 6, further including in response to the determination that the I/O command is the read command: determining a tweak value based on the starting LBA and the offset, and decrypting the encrypted data based on the key and further based on the tweak value.

Example 9 provides the method of example 8, where: decrypting the encrypted data includes decrypting partial data based on the key and the tweak value (e.g., without waiting for receipt of all data from the storage device), and sending the data to the host device includes sending partial decrypted data (e.g., without waiting for and decrypting all the data from the storage device).

Example 10 provides the method of any one of examples 1-7, further including in response to the determination that the I/O command is the write command: receiving, from the storage device, a first request to fetch the data, where the first request includes the modified data pointer, accessing the I/O context information based on the modified data pointer, sending, to the host device, a second request for the data based on the I/O context information, where the second request includes the data pointer.

Example 11 provides the method of any one of examples 1-10, where: the modified data pointer includes a tag to specify an address type, including one of a PRP address or PRP list address, and in response to receipt, from the storage device, of a request for a PRP list: providing the PRP list, where each element of the PRP list includes the modified data pointer and an offset.

Example 12 provides a storage accelerator to couple with a host device and a storage device and to implement inline cryptography techniques, where the storage accelerator includes I/O interface logic to receive an I/O command from the host device via a virtual function, where the I/O command includes an address of the storage device and a data pointer; and logic to: send a modified I/O command to the storage device, where the modified I/O command includes a modified data pointer; in response to a determination that the I/O command is a write command: receive the data from the host device, encrypt the data with a key corresponding to the virtual function, and send encrypted data to the storage device; and in response to a determination that the I/O command is a read command: receive the encrypted data from the storage device, determine the key based on the modified data pointer, decrypt the encrypted data based on the key, and send the decrypted data to the host device.

Example 13 provides the storage accelerator of example 12, where: in response to receipt of the I/O command, the logic is to: store, in a memory of the storage accelerator, context information related to the I/O command, where the modified data pointer includes a reference to the context information, and access the context information based on the reference to determine the key.

Example 14 provides the storage accelerator of example 13, further including the memory to store the context information.

Example 15 provides the storage accelerator of any one of examples 13-14, where: the context information includes an I/O context ID for the I/O command, and the reference to the context information in the modified data pointer includes the I/O context ID.

Example 16 provides the storage accelerator of any one of examples 13-15, where: the memory is to store a plurality of keys corresponding to virtual functions, the context information includes a key index to access the key from the plurality of keys.

Example 17 provides the storage accelerator of any one of examples 13-16, where: the context information includes the data pointer from the I/O command, and the modified data pointer includes a data pointer index to access the data pointer.

Example 18 provides the storage accelerator of any one of examples 13-17, where: the context information includes virtual function information to identify the virtual function via which the I/O command was received.

Example 19 provides the storage accelerator of any one of examples 13-18, where: the address includes a starting LBA, the context information includes the starting LBA, and the modified data pointer includes an LBA index to access the starting LBA, and an offset relative to the starting LBA.

Example 20 provides the storage accelerator of example 19, where: in response to the determination that the I/O command is the read command, the logic is to: determine a tweak based on the starting LBA and the offset, and decrypt the encrypted data based on the key and further based on the tweak.

Example 21 provides the storage accelerator of example 20, where: to decrypt the encrypted data, the logic is to: decrypt partial data based on the key and the tweak value, and to send the data to the host device, the logic is to: send partial decrypted data.

Example 22 provides the storage accelerator of any one of examples 12-21, where: the modified data pointer includes a tag to specify an address type, including one of a PRP address or PRP list address, and in response to receipt of a request for a PRP list from the storage device, the logic is to: send the PRP list to the storage device, where each element of the PRP list includes the modified data pointer and an offset.

Example 23 provides one or more non-transitory computer-readable media storing instructions that, when executed by one or more processors, cause the one or more processors to perform a method of inline cryptography in a storage accelerator, where the storage accelerator is to couple with a host device and a storage device, and where the method includes receiving an I/O command from the host device via a virtual function, where the I/O command includes an address of the storage device and a data pointer; sending a modified I/O command to the storage device, where the modified I/O command includes a modified data pointer; in response to a determination that the I/O command is a write command: receiving the data from the host device, encrypting the data with a key corresponding to the virtual function, and sending encrypted data to the storage device; and in response to a determination that the I/O command is a read command: receiving the encrypted data from the storage device, determining the key based on the modified data pointer, decrypting the encrypted data based on the key, and sending the decrypted data to the host device.

Example 24 provides the one or more non-transitory computer-readable media of example 23, where the method further includes in response to receipt of the I/O command: storing, in a memory of the storage accelerator, context information related to the I/O command, where: the modified data pointer includes a reference to the context information, and determining the key includes accessing the context information based on the reference.

Example 25 provides the one or more non-transitory computer-readable media of example 23, where: the context information includes an I/O context ID for the I/O command, and the reference to the context information in the modified data pointer includes the I/O context ID.

Example 26 provides the one or more non-transitory computer-readable media of examples 24 or 25, where: the memory is to store a plurality of keys corresponding to virtual functions, the context information includes a key index to access the key from the plurality of keys.

Example 27 provides the one or more non-transitory computer-readable media of any one of examples 23-26, where: the context information includes the data pointer from the I/O command, and the modified data pointer includes a data pointer index to access the data pointer.

Example 28 provides the one or more non-transitory computer-readable media of any one of examples 23-27, where: the context information includes virtual function information to identify the virtual function via which the I/O command was received.

Example 29 provides the one or more non-transitory computer-readable media of any one of examples 23-28, where: the address includes a starting logical block address (LBA), the context information includes the starting LBA, and the modified data pointer includes an LBA index to access the starting LBA, and an offset relative to the starting LBA.

Example 30 provides the one or more non-transitory computer-readable media of example 29, where the method further includes in response to the determination that the I/O command is the read command: determining a tweak based on the starting LBA and the offset, and decrypting the encrypted data based on the key and further based on the tweak.

Example 31 provides the one or more non-transitory computer-readable media of example 30, where: decrypting the encrypted data includes decrypting partial data based on the key and the tweak value, and sending the data to the host device includes sending partial decrypted data.

Example 32 provides the one or more non-transitory computer-readable media of any one of examples 23-31, where: the modified data pointer includes a tag to specify an address type, including one of a PRP address or PRP list address, and in response to receipt, from the storage device, of a request for a PRP list: providing the PRP list, where each element of the PRP list includes the modified data pointer and an offset.

Example 33 provides a storage accelerator to couple with a host device and a storage device and to implement inline cryptography techniques, where the storage accelerator includes means to receive an I/O command from the host device via a virtual function, where the I/O command includes an address of the storage device and a data pointer; means to send a modified I/O command to the storage device, where the modified I/O command includes a modified data pointer; means to, in response to a determination that the I/O command is a write command: receive the data from the host device, encrypt the data with a key corresponding to the virtual function, and send encrypted data to the storage device; and means to, in response to a determination that the I/O command is a read command: receive the encrypted data from the storage device, determine the key based on the modified data pointer, decrypt the encrypted data based on the key, and send the decrypted data to the host device.

Example 34 provides the storage accelerator of example 33, further including means to, in response to receipt of the I/O command: store, in a memory of the storage accelerator, context information related to the I/O command, where the modified data pointer includes a reference to the context information, and access the context information based on the reference to determine the key.

Example 35 provides the storage accelerator of any one of examples 33-34, where: the context information includes an I/O context ID for the I/O command, and the reference to the context information in the modified data pointer includes the I/O context ID.

Example 36 provides the storage accelerator of any one of examples 33-35, where: the memory is to store a plurality of keys corresponding to virtual functions, the context information includes a key index to access the key from the plurality of keys.

Example 37 provides the storage accelerator of any one of examples 33-36, where: the context information includes the data pointer from the I/O command, and the modified data pointer includes a data pointer index to access the data pointer.

Example 38 provides the storage accelerator of any one of examples 33-37, where: the context information includes virtual function information to identify the virtual function via which the I/O command was received.

Example 39 provides the storage accelerator of any one of examples 33-38, where: the address includes a starting LBA, the context information includes the starting LBA, and the modified data pointer includes an LBA index to access the starting LBA, and an offset relative to the starting LBA.

Example 40 provides the storage accelerator of example 39, further including means to, in response to the determination that the I/O command is the read command: determine a tweak based on the starting LBA and the offset, and decrypt the encrypted data based on the key and further based on the tweak.

Example 41 provides the storage accelerator of example 40, where: the means to decrypt the data includes means to: decrypt partial data based on the key and the tweak value, and to send the data to the host device, the logic is to: send partial decrypted data.

Example 42 provides the storage accelerator of any one of examples 33-41, where: the modified data pointer includes a tag to specify an address type, including one of a PRP address or PRP list address, and the storage accelerator further includes, in response to receipt of a request for a PRP list from the storage device, means to: send the PRP list to the storage device, where each element of the PRP list includes the modified data pointer and an offset.

Example 43 provides a system to implement inline cryptography with a storage accelerator, the system including a processor; and the storage accelerator coupled with the processor, where the storage accelerator includes I/O interface logic to receive an I/O command from the host device via a virtual function, where the I/O command includes an address of the storage device and a data pointer; and logic to: send a modified I/O command to the storage device, where the modified I/O command includes a modified data pointer; in response to a determination that the I/O command is a write command: receive the data from the host device, encrypt the data with a key corresponding to the virtual function, and send encrypted data to the storage device; and in response to a determination that the I/O command is a read command: receive the encrypted data from the storage device, determine the key based on the modified data pointer, decrypt the encrypted data based on the key, and send the decrypted data to the host device.

Example 44 provides the system of example 43, where: the storage accelerator is in accordance with any one of claims 13-22.

Example 45 provides the system of example 43 or 44, further including the storage device.

### Variations and other notes

The detailed description, such as the "Select examples" section, provide various examples of the embodiments disclosed herein.

As used herein, the term "coupled to" or "coupled with" refers to a relationship between electronic components or circuit elements wherein the components are in electronic communication with one another and capable of transmitting and/or receiving electrical signals between them. The term "coupled to" does not require a direct physical or electrical connection between the coupled components. Rather, "coupled to" can encompass arrangements where the components are connected through one or more intervening elements, components, circuits, or transmission paths. For example, a first component may be "coupled to" a second component through intermediate components such as resistors, capacitors, inductors, transistors, logic gates, buses, transformers, or other electronic components, or through intermediate transmission paths, while still maintaining the capability for electronic communication between the first and second components.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

### The following is a list of further preferred embodiments of the invention:

Embodiment 1. A method of performing inline cryptography in a storage accelerator, wherein the storage accelerator is to couple with a host device and a storage device, and wherein the method comprises:
   receiving an input/output (I/O) command from the host device via a virtual function, wherein the I/O command comprises an address of the storage device and a data pointer;
   sending a modified I/O command to the storage device, wherein the modified I/O command comprises a modified data pointer;
   in response to a determination that the I/O command is a write command:
      receiving data to write from the host device,
      encrypting the data with a key corresponding to the virtual function, and
      sending encrypted data to the storage device; and
   in response to a determination that the I/O command is a read command:
      receiving the encrypted data and the modified data pointer from the storage device,
      determining the key based on the modified data pointer,
      decrypting the encrypted data based on the key, and
      sending decrypted data to the host device.
Embodiment 2. The method of embodiment 1, further comprising:
   in response to receipt of the I/O command: storing, in a memory of the storage accelerator, context information related to the I/O command, wherein:
   the modified data pointer comprises a reference to the context information, and
   determining the key comprises accessing the context information based on the reference.
Embodiment 3. The method of embodiment 2, wherein:
   the context information comprises:
      an I/O context identifier (ID) for the I/O command, and
   the reference to the context information in the modified data pointer comprises:
      the I/O context ID.
Embodiment 4. The method of embodiment 2, wherein:
   the memory is to store a plurality of keys corresponding to virtual functions, and
   the context information comprises:
      a key index to access the key from the plurality of keys.
Embodiment 5. The method of embodiment 2, wherein:
   the context information comprises:
      the data pointer from the I/O command, and
   the modified data pointer comprises:
      a data pointer index to access the data pointer.
Embodiment 6. The method of embodiment 2, wherein:
   the address comprises a logical block address (LBA),
   the context information comprises:
      the LBA, and
   the modified data pointer comprises:
      an LBA index to access the LBA, and
      an offset relative to the LBA.
Embodiment 7. The method of embodiment 6, further comprising:
   in response to the determination that the I/O command is the read command:
   determining a tweak value based on the LBA and the offset, and
   decrypting the encrypted data based on the key and further based on the tweak value.
Embodiment 8. The method of embodiment 7, wherein:
   decrypting the encrypted data comprises:
      decrypting partial data based on the key and the tweak value, and
   sending the data to the host device comprises:
      sending partial decrypted data.
Embodiment 9. The method of embodiment 2, further comprising:
   in response to the determination that the I/O command is the write command:
   receiving, from the storage device, a first request to fetch the data, wherein the first request comprises the modified data pointer,
   accessing the context information based on the modified data pointer, and
   sending, to the host device, a second request for the data based on the context information, wherein the second request comprises the data pointer.
Embodiment 10. The method of embodiment 1, wherein:
   the modified data pointer comprises a tag to specify an address type, including one of a physical region page (PRP) address or PRP list address, and
   in response to receipt, from the storage device, of a request for a PRP list:
      providing the PRP list, wherein each element of the PRP list comprises the modified data pointer and an offset.
Embodiment 11. A storage accelerator to couple with a host device and a storage device and to implement inline cryptography techniques, wherein the storage accelerator comprises:
   input/output (I/O) interface logic to receive an I/O command from the host device via a virtual function, wherein the I/O command comprises an address of the storage device and a data pointer; and
   logic to:
      send a modified I/O command to the storage device, wherein the modified I/O command comprises a modified data pointer;
      in response to a determination that the I/O command is a write command:
         receive data to write from the host device,
         encrypt the data with a key corresponding to the virtual function, and
         send encrypted data to the storage device; and
      in response to a determination that the I/O command is a read command:
         receive the encrypted data from the storage device,
         determine the key based on the modified data pointer,
         decrypt the encrypted data based on the key, and
         send decrypted data to the host device.
Embodiment 12. The storage accelerator of embodiment 11, wherein:
   in response to receipt of the I/O command, the logic is to:
   store, in a memory of the storage accelerator, context information related to the I/O command, wherein the modified data pointer comprises a reference to the context information, and
   access the context information based on the reference to determine the key.
Embodiment 13. The storage accelerator of embodiment 12, further comprising:
   the memory to store the context information.
Embodiment 14. The storage accelerator of embodiment 12, wherein:
   the context information comprises:
      an I/O context identifier (ID) for the I/O command, and
   the reference to the context information in the modified data pointer comprises:
      the I/O context ID.
Embodiment 15. The storage accelerator of embodiment 12, wherein:
   the memory is to store a plurality of keys corresponding to virtual functions, and
   the context information comprises:
      a key index to access the key from the plurality of keys.
Embodiment 16. The storage accelerator of embodiment 12, wherein:
   the context information comprises:
      the data pointer from the I/O command, and
   the modified data pointer comprises:
      a data pointer index to access the data pointer.
Embodiment 17. The storage accelerator of embodiment 12, wherein:
   the address comprises a logical block address (LBA),
   the context information comprises:
      the LBA, and
   the modified data pointer comprises:
      an LBA index to access the LBA, and
      an offset relative to the LBA.
Embodiment 18. The storage accelerator of embodiment 17, wherein:
   in response to the determination that the I/O command is the read command, the logic is to:
   determine a tweak value based on the LBA and the offset, and
   decrypt the encrypted data based on the key and further based on the tweak value.
Embodiment 19. One or more non-transitory computer-readable media storing instructions that, when executed by one or more processors, cause the one or more processors to perform a method of inline cryptography in a storage accelerator, wherein the storage accelerator is to couple with a host device and a storage device, and wherein the method comprises:
   receiving an input/output (I/O) command from the host device via a virtual function, wherein the I/O command comprises an address of the storage device and a data pointer;
   sending a modified I/O command to the storage device, wherein the modified I/O command comprises a modified data pointer;
   in response to a determination that the I/O command is a write command:
      receiving data to write from the host device,
      encrypting the data with a key corresponding to the virtual function, and
      sending encrypted data to the storage device; and
   in response to a determination that the I/O command is a read command:
      receiving the encrypted data from the storage device,
      determining the key based on the modified data pointer,
      decrypting the encrypted data based on the key, and
      sending decrypted data to the host device.
Embodiment 20. The one or more non-transitory computer-readable media of embodiment 19, wherein the method further comprises:
   in response to receipt of the I/O command: storing, in a memory of the storage accelerator, context information related to the I/O command, wherein:
   the modified data pointer comprises a reference to the context information, and
   determining the key comprises accessing the context information based on the reference.

## Claims

1. A method of performing inline cryptography in a storage accelerator, wherein the storage accelerator is to couple with a host device and a storage device, and wherein the method comprises:
receiving an input/output (I/O) command from the host device via a virtual function, wherein the I/O command comprises an address of the storage device and a data pointer;
sending a modified I/O command to the storage device, wherein the modified I/O command comprises a modified data pointer;
in response to a determination that the I/O command is a write command:
receiving data to write from the host device,
encrypting the data with a key corresponding to the virtual function, and
sending encrypted data to the storage device; and
in response to a determination that the I/O command is a read command:
receiving the encrypted data and the modified data pointer from the storage device,
determining the key based on the modified data pointer,
decrypting the encrypted data based on the key, and
sending decrypted data to the host device.

2. The method of claim 1, further comprising:
in response to receipt of the I/O command: storing, in a memory of the storage accelerator, context information related to the I/O command, wherein:
the modified data pointer comprises a reference to the context information, and
determining the key comprises accessing the context information based on the reference.

3. The method of claim 2, wherein:
the context information comprises:
an I/O context identifier (ID) for the I/O command, and
the reference to the context information in the modified data pointer comprises:
the I/O context ID.

4. The method of claim 2, wherein:
the memory is to store a plurality of keys corresponding to virtual functions, and
the context information comprises:
a key index to access the key from the plurality of keys.

5. The method of claim 2, wherein:
the context information comprises:
the data pointer from the I/O command, and
the modified data pointer comprises:
a data pointer index to access the data pointer.

6. The method of claim 2, wherein:
the address comprises a logical block address (LBA),
the context information comprises:
the LBA, and
the modified data pointer comprises:
an LBA index to access the LBA, and
an offset relative to the LBA, and/or
further comprising:
in response to the determination that the I/O command is the read command:
determining a tweak value based on the LBA and the offset, and
decrypting the encrypted data based on the key and further based on the tweak value, and/or
wherein:
decrypting the encrypted data comprises:
decrypting partial data based on the key and the tweak value, and
sending the data to the host device comprises:
sending partial decrypted data.

7. The method of claim 2, further comprising:
in response to the determination that the I/O command is the write command:
receiving, from the storage device, a first request to fetch the data, wherein the first request comprises the modified data pointer,
accessing the context information based on the modified data pointer, and
sending, to the host device, a second request for the data based on the context information, wherein the second request comprises the data pointer.

8. The method of one of claims 1 to 7, wherein:
the modified data pointer comprises a tag to specify an address type, including one of a physical region page (PRP) address or PRP list address, and
in response to receipt, from the storage device, of a request for a PRP list:
providing the PRP list, wherein each element of the PRP list comprises the modified data pointer and an offset.

9. A storage accelerator to couple with a host device and a storage device and to implement inline cryptography techniques, wherein the storage accelerator comprises:
input/output (I/O) interface logic to receive an I/O command from the host device via a virtual function, wherein the I/O command comprises an address of the storage device and a data pointer; and
logic to:
send a modified I/O command to the storage device, wherein the modified I/O command comprises a modified data pointer;
in response to a determination that the I/O command is a write command:
receive data to write from the host device,
encrypt the data with a key corresponding to the virtual function, and
send encrypted data to the storage device; and
in response to a determination that the I/O command is a read command:
receive the encrypted data from the storage device,
determine the key based on the modified data pointer,
decrypt the encrypted data based on the key, and
send decrypted data to the host device.

10. The storage accelerator of claim 9, wherein:
in response to receipt of the I/O command, the logic is to:
store, in a memory of the storage accelerator, context information related to the I/O command, wherein the modified data pointer comprises a reference to the context information, and
access the context information based on the reference to determine the key.

11. The storage accelerator of claim 10, further comprising:
the memory to store the context information.

12. The storage accelerator of claim 10 or 11, wherein:
the context information comprises:
an I/O context identifier (ID) for the I/O command, and
the reference to the context information in the modified data pointer comprises:
the I/O context ID, or
wherein:
the memory is to store a plurality of keys corresponding to virtual functions, and
the context information comprises:
a key index to access the key from the plurality of keys, or
wherein:
the context information comprises:
the data pointer from the I/O command, and
the modified data pointer comprises:
a data pointer index to access the data pointer.

13. The storage accelerator of one of claims 10 to 12, wherein:
the address comprises a logical block address (LBA),
the context information comprises:
the LBA, and
the modified data pointer comprises:
an LBA index to access the LBA, and
an offset relative to the LBA, and/or
wherein:
in response to the determination that the I/O command is the read command, the logic is to:
determine a tweak value based on the LBA and the offset, and
decrypt the encrypted data based on the key and further based on the tweak value.

14. One or more non-transitory computer-readable media storing instructions that, when executed by one or more processors, cause the one or more processors to perform a method of inline cryptography in a storage accelerator, wherein the storage accelerator is to couple with a host device and a storage device, and wherein the method comprises:
receiving an input/output (I/O) command from the host device via a virtual function, wherein the I/O command comprises an address of the storage device and a data pointer;
sending a modified I/O command to the storage device, wherein the modified I/O command comprises a modified data pointer;
in response to a determination that the I/O command is a write command:
receiving data to write from the host device,
encrypting the data with a key corresponding to the virtual function, and
sending encrypted data to the storage device; and
in response to a determination that the I/O command is a read command:
receiving the encrypted data from the storage device,
determining the key based on the modified data pointer,
decrypting the encrypted data based on the key, and
sending decrypted data to the host device.

15. The one or more non-transitory computer-readable media of claim 14, wherein the method further comprises:
in response to receipt of the I/O command: storing, in a memory of the storage accelerator, context information related to the I/O command, wherein:
the modified data pointer comprises a reference to the context information, and
determining the key comprises accessing the context information based on the reference.
